(19) Europäisches Patentamt
European Patent Office
Office européen des brevets

(11) **EP 2 177 557 A1**

(12) **EUROPEAN PATENT APPLICATION**
published in accordance with Art. 153(4) EPC

(43) Date of publication:
**21.04.2010 Bulletin 2010/16**

(21) Application number: **08792233.2**

(22) Date of filing: **05.08.2008**

(51) Int Cl.:
*C08J 3/12* (2006.01)    *B29C 67/00* (2006.01)
*C08L 23/00* (2006.01)   *C08L 51/04* (2006.01)

(86) International application number:
**PCT/JP2008/064066**

(87) International publication number:
**WO 2009/020130 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.08.2007 JP 2007206895**

(71) Applicants:
• **Techno Polymer Co., Ltd.**
  **Minato-ku**
  **Tokyo 105-0021 (JP)**
• **The University of Tokyo**
  **Bunkyo-ku,**
  **Tokyo 113-0033 (JP)**

(72) Inventors:
• **KURATA, Takashi**
  **Tokyo 105 021 (JP)**
• **KITADA, Fusamichi**
  **Tokyo 1050 021 (JP)**
• **NIINO, Toshiki**
  **Tokyo 113-0033 (JP)**
• **OIZUMI, Shunsuke**
  **Tokyo 113-0033 (JP)**

(74) Representative: **Wilhelms · Kilian & Partner**
  **Patentanwälte**
  **Eduard-Schmid-Straße 2**
  **81541 München (DE)**

(54) **LASER-SINTERABLE POWDER AND SHAPED ARTICLE THEREOF**

(57)    A resin powder suitable for laser-sintering is provided, which retains properties of styrene resins such as impact resistance and low water absorption and shows sharp decrease of melt viscosity similarly to crystalline resins at a temperature not lower than the glass transition temperature.

The laser-sinterable powder is made of a thermoplastic resin composition comprising 10-80 mass% of a crystalline resin (A) with a melting point of 80-250˚C and 20-90 mass% of a styrene resin (B), 1 and having a 50% average particle diameter of 10-100 $\mu$m. The Component (A) is preferably a polyolefin resin. The Component (B) is preferably a rubber-reinforced styrene resin composition, wherein the rubber component is preferably an ethylene-$\alpha$-olefin copolymer rubber and/or a hydrogenated product of a diene rubber. The laser-sinterable powder preferably has a melt flow rate of 5-500 g/10 min.

**Description**

TECHNICAL FIELD

The present invention relates to a laser-sinterable resin powder useful as a raw material powder in selective laser sintering and a shaped article obtained using the same, and more specifically relates to a laser-sinterable resin powder which is excellent in dimensional accuracy, high in density and excellent in strength, and further provides shaped articles low in water absorption.

BACKGROUND ART

Recently, techniques of performing a design or plan of products or components with **a** computer system such as CAD, CAM and CAE have become popular in various industrial fields for automobiles, airplanes, buildings, home appliances, toys and convenience goods. A method for producing a physical model which is materialized from a three-dimensional model designed with such a computer system (CAD) is called as rapid prototyping (RP) system, rapid manufacturing (RM) system or the like (hereinafter, collectively referred to as "RIP system").

The RP system includes a selective laser-sintering (SLS) in which a thin layer of a metal or resin powder is selectively irradiated with a laser beam in accordance with slice data obtained by converting CAD data or the like of a three-dimensional shaped article so as to allow the powder to selectively melt and adhere to each other, and then another thin layer of a metal or resin powder is formed on the above layer, and the same operations as above are repeated so as to perform sequential layer buildup to obtain a shaped article; and selective laser-sintering machines utilizing the SLS have been already commercially available (for example, in Patent Documents 1 and 2).

In SLS, shaping is performed by heating a layer of a resin powdery which has been fed to a part cylinder, up to a temperature (part bed temperature) around a softening point $T_s$ of the resin, in order to maintain an inner stress between thin layers to be lower and shorten a time required for shaping, and then selectively irradiating the layer with a laser beam to heat the resin powder to a temperature (caking temperature $T_c$) not less than the softening point, in order to allow them to fuse each other.

A typical example of the resin powder currently used in SLS is polyamide resin. Polyamide resin is a crystalline resin, and has a softening point Ts corresponding to the melting point $T_m$ thereof. Since polyamide resin is high in laser beam absorption, it easily reaches the melting point $T_m$ or higher by irradiation with a laser beam and fluidizes so as to fuse with each other. Thugs, it is suitable for SLS. However, shaped articles obtained by SLS are generally in porous state, and thus have required sealing treatment by vacuum impregnation to acquire hermeticity. Also, since polyamide resin is high in water absorption, post-treatment such as impregnating a water-soluble polyurethane to a shaped article has been required.
Here, a laser sinterable resin powder which does not require such a post-treatment has been desired.

On the other hand, styrene resin such as ABS resin is low in water absorption, and not only excellent in mechanic strength such as impact resistance but also excellent in secondary processability such as in coating and metal plating, and further provides transparent shaped articles. Thus, it is attractive as a raw material for the RP system.

However, styrene resin is a noncrystalline resin and has a softening point ($T_s$) corresponding to a glass transition temperature ($T_g$) thereof. When a noncrystalline resin powder is used as a raw material for SLS, it is required that a part bed temperature is maintained around a glass transition temperature ($T_g$), and then a laser beam is radiated to heat to a glass transition temperature ($T_g$) or higher in order to cause the fusion. However, a noncrystalline resin shows only a little decrease in melt viscosity relative to a temperature raise from the glass transition temperature ($T_g$). Thus, when the temperature of a noncrystalline resin powder is elevated slightly over the glass transition temperature ($T_g$) by irradiation with a laser beam, the resin is still too high in melt viscosity, and the whole resin powder does not come to uniformly melt, so that shaped articles tend to be porous and low in density. On the other hand, use of a high-output laser makes it possible to raise the temperature of noncrystalline resins much higher than the glass transition temperature ($T_g$), but is difficult to control heat such that powders outside the laser-scanning region may be molten and solidified to cause sintering swell and impair dimensional accuracy, and materials may deteriorated. Also, inner stress may be accumulated in shaped articles due to abrupt cooling after the melting and solidifying so that warping of shaped articles may occur. Furthermore, when the part bed temperature is raised too high, resin powders supplied to the part cylinder may block.

Patent Document 1: JP-A-H3-183530
Patent Document 2: JP-B-3477576

DISCLOSURE OF THE INVENTION

PROBLEMS TO BE SOLVED BY THE INVENTION

The present invention aims at providing a resin powder suitable for laser sintering, which retains properties such as high impact resistance and low water absorption of styrene resins and exhibits sharp decrease of melt viscosity like crystalline resins at a temperature not lower than a glass transition temperature.

MEANS FOR SOLVING THE PROBLEMS

As a result of diligent researches in view of the above mentioned object, the present inventors have found that a shaped article which exhibits sharp decrease of melt viscosity at a temperature of a softening point or higher, has excellent laser sinterability and also has high impact resistance, high density, low water absorption and excellent dimensional accuracy can be obtained by using a resin powder comprising a specific crystalline resin and a styrene resin. Thus, the present invention has been completed.

According to the present invention, a laser-sinterable ponder made of a thermoplastic resin composition comprising 10-80 mass% of the following Component (A) and 20-90 mass% of the following Component (B), and having a 50% average particle diameter of 10-100 μm, is provided.
Component (A): a crystalline resin with a melting point of 80-250°C.
Component (B): a styrene resin.

According to another aspect of the present invention, a shaped article made of the above laser-sinterable powder is provided. The shaped article can be typically obtained by irradiating a thin layer of a laser-sinterable powder with a laser beam so as to selectively sinter the powder of the thin layer, and then repeating a step of layering another thin layer of a laser-sinterable powder on the thin layer, followed by irradiating the another thin layer with a laser beam so as to selectively sinter powder of the another thin layer.

EFFECT OF THE INVENTION

According to the present invention, a resin powder is made by using a specific crystalline resin and a styrene resin in combination, and thus a thermoplastic resin powder which exhibits sharp decrease of melt viscosity at a temperature not less than a softening point and has excellent laser sinterability can be obtained. The shaped article obtained by laser-sintering the above resin powder has high impact resistance, excellent secondary processability, low water absorption and excellent dimensional accuracy and others originated from the styrene resin.

BEST MODE FOR CARRYING OUT THE INVENTION

Component (A)

The component (A) used in the present invention is not particularly limited as long as it is a crystalline resin with a melting point of 80-250°C, and includes polyolefin resins such as polyethylene resins and polypropylene resins, polyamide resins such as nylon 6 resins and nylon 66 resins, polyester resins such as polyethylene terephtalate resins and polybutylene terephthalate resins, polyether ketone resins, polyether ether ketone resins, polyphenylene ether resins, polyphenylene sulfide resins and polyimide resins. Of these crystalline resins, polyolefin resins are most preferable.

The melting point of the above crystalline resin is 80-250°C, preferably 90-220°C, more preferably 100-200°C, and further preferably 100-180°C. When the melting point of the above crystalline resin is within the range of 80-250°C, density, strength and dimensional accuracy of the shaped article are well-balanced favorably.

The above polyolefin resin is typically a polymer comprising at least one olefin selected from the group consisting of ethylene and α-olefins with 3-10 carbon atoms as a constituent monomer unit. As the polyolefin resin, preferably used is one having a degree of crystallinity measured by X-ray diffraction at room temperature and more preferably a degree of crystallinity of not less than 20%, and preferably used is one having a melting point measured in accordance with JIS K7121 of not less than 40°C.

Olefins as the constituent monomer unit of the above polyolefin resin include, for example, ethylene, propylene, 1-butene, 1-pentene, 1-hexene, 3-methyl-1-butene, 4-methyl-1-pentene and 3-methyl-1-hexene, and preferably ethylene, propylene, 1-butene, 3-methyl-1-butene and 4-methyl-1-pentene. In addition, another monomer including non-conjugated dienes such as 4-methyl-1,4-hexadiene, 5-methyl-1,4-hexsdiene, 7-methyl-1, 6-octadiene and 1, 9-decadiene can be used as a part of the constituent monomer unit.

The above polyolefin resin may be a homopolymer or copolymer, and the copolymer may be any of a random copolymer or block copolymer, but is preferably a block copolymer because a shaped article with high density and high impact resistance can be obtained. As the above polyolefin resin, may be used ionomers, ethylene-vinyl acetate copolymers, ethylene-vinyl alcohol copolymers, cyclic olefin copolymers, chlorinated polyethylenes, brominated polyethylenes and modified polyolefin resins modified with a functional group. As the modified polyolefin resin, can be used a conventional one which is obtained by, for example, graft-copolymerizing a functional group-containing unsaturated compound with a polyolefin resin. The functional group-containing unsaturated compound used here is preferably one that improves compatibility with a Component (B), and includes, for example, at least one selected from the group consisting of aromatic vinyl compounds, vinyl cyanide compounds, unsaturated carboxylic acids and unsaturated acid anhydrides. The modified polyolefin resin that is preferable in view of compatibility with the Component (B) includes, for example, a polyolefin resin modified with maleic anhydride, and a polyolefin resin modified with styrene and acrylonitrile. These can be used alone or in combination of two or more.

Of the above polyolefin resins, polypropylene resins which are polymers mainly comprising propylene units such as polypropylene and propylene-ethylene copolymers are preferable, propylene-ethylene random copolymers and propylene-ethylene block copolymers are more preferable, and propylene-ethylene block copolymers are particularly preferable. These can be used alone or in combination of two or more.

The above polyolefin resin preferably has, for example, in case of a polypropylene resin, a melt flow rate (MFR) measured in accordance with JIS K7210:1999 at a temperature of 230˚C with a load of 2.16 kg of preferably 0.1-500 g/ 10 mien and more preferably 0.5-200 g/10 min.

The above polyolefin resin may be a so-called unmodified polypropylene or may be a modified polypropylene modified with a functional group. As the modified polypropylene, can be used a conventional one which can be obtained by, for example, graft-polymerizing a functional group-containing unsaturated compound with a polypropylene. The functional group-containing unsaturated compound used here is preferably one that improves compatibility with the Component (B), and includes, for example, at least one selected from the group consisting of aromatic vinyl compounds, vinyl cyanide compounds, unsaturated carboxylic acids and unsaturated acid anhydrides. The modified polypropylene that is preferable in view of compatibility with the Component (B) includes, for example, a polypropylene modified with maleic anhydride, and a polypropylene modified with styrene and acrylonitrile. These can be used alone or In combination of two or more.

The amount to be used of Component (A) of the present invention is 10-80 mass%, preferably 20-80 mass%, more preferably 40-80 mass% and further preferably 60-80 masses, relative to 100 mass% of the total of Components (A) and (B) of the present invention. When the amount to be used of Component (A) is less than 10 mass%, density and impact resistance of the shaped article are lowered, and further dimensional, accuracy thereof is inferior. On the other hand, when the amount to be used of Component (A) exceeds 80 mass%, impact resistance (Charpy impact strength with notch) and water absorption resistance of the shaped article are inferior, and further warping occurs.

Component (B)

Component (B) used in the present invention is a styrene resin, and typically a rubber-reinforced styrene resin composition obtained by polymerizing a monomer component (b) comprising an aromatic vinyl monomer and optionally another monomer copolymerizable with the aromatic vinyl monomer in a presence of a rubber-like polymer (a) and/or a (co)polymer of the monomer component (b). The latter (co)polymer is obtained by polymerizing the monomer component (b) in the absence of the rubber-like polymer (a).

From the viewpoint of impact resistance. Component (B) of the present invention is preferably one comprising at least one kind of polymer obtained by the monomer component (b) in the presence of the rubber-like polymer (a).

Examples of the above rubber-like polymer (a) include, but net particularly limited to, diene rubbers including polybutadiene, butadiene-styrene random copolymers, butadiene-styrene block copolymers, butadiene-acrylonitrile copolymers and hydrogenated products thereof; and non-diene rubbers including ethylene-α-olefin copolymer rubbers such as ethylene-propylene copolymers, ethylene-propylerie-non-conjugated diene copolymers, ethylene-l-butene copolymers, and ethylene-1-butene-non-conjugated diene copolymers, acrylic rubbers, silicone rubbers, and silicone-acrylic composite rubbers. These can be used alone or in combination of two or more.

Of these, hydrogenated products (a1) of diene rubbers and ethylene-α-olefin copolymer rubbers (a2) are preferable from the viewpoint of high compatibility with the Component (A) . These can be used alone or in combination of two or more.

Examples of the hydrogenated products (a1) of diene rubbers include hydrogenated products of conjugated diene block copolymers having the following structure. That is, the block copolymer comprises two or more of the followings: a polymer block A composed of an aromatic vinyl compound unit, a polymer block B in which 95 mol% or more of the double bonds of a polymer made from a conjugated diene compound unit with a 1, 2-vinyl bond content of more than 25 mol% is hydrogenated, a polymer block C in which 95 mol% or more of the double bonds of a polymer made from a conjugated diene compound unit with a 1, 2-vinyl bond content of not more than 25 mol% is hydrogenated, and a polymer block D in which 95 mol% or more of the double bonds of a copolymer of an aromatic vinyl compound unit with a conjugated diene compound unit is hydrogenated.

The aromatic vinyl compound used for the production of the above polymer block A includes, for example, styrene, α-methylstyrene, methylstyrenes other than α-methyl styrene, vinylxylene, monochlorostyrene, dichlorostyrene, monobromostyrene, dibromostyrene, fluorostyrene, p.,t.-but>71stj/.rene, ethylstyrene and vinyl naphthalene, and these can be used alone or in combination of two or more. Preferable one of these is styrene. The ratio of a polymer block A in a block copolymer is preferably 0-65 mass% and further preferably 10-40 mass% based on the block copolymer. When the polymer block A exceeds 65 masts% impact resistance may be insufficient.

The above polymer blocks B, C and D can be obtained by hydrogenating a polymer of a conjugated diene compound. The conjugated compound, used for the production of the above polymer blocks B, C and D includes 1,3-butadiene, isoprene, 1,3-pentadiene and chloroprene, but in order to obtain a hydrogenated diene rubber-like polymer which can be industrially utilized and has excellent properties, 1,3-butadiene and isoprene are preferable. These can be used alone or in combination of two or more. The aromatic vinyl compound used for the production of the above polymer block D includes the same as the aromatic vinyl compound used for the production of the above polymer block A, and these can be used alone or tin combination for two or more. Preferable one of these is styrene.

The hydrogenation ratio of the above polymer blocks B, C and D is not less than 95 mol% and preferably not less than 9fez mol%. When it is less than 95 mol%, gelation occurs during polymerization, and thus polymerization may not be stably performed. The 1,2-vinyl bond content of the polymer block B its preferably more than 25 mol% and not more than 90 mol%, and further preferably 30-80 mol%. When the 1,2-vinyl bond content, of the polymer block B is not more than 25 mol%, rubbery properties are lost and impact resistance may be insufficient-On the other hand, when it exceeds 90 mol%, chemical resistance may be insufficient. The 1,2-vinyl bond content of the polymer block C is preferably not more than 25 mol% and further preferably not more than 20 mol%. When the 1, 2-vinyl bond content of the polymer block C exceeds 25 mol%, scratch resistance and sliding properties may not be sufficiently exhibited. The 1,2-vinyl bond content of the polymer block D is preferably 25-90 mol%, and further preferably 30-80 mol%. When the 1,2-vinyl bond content of the polymer block D is less than 25 mol%, rubbery properties are and impact resistance may be insufficient. On the other hand, when lit exceeds 90 mol%, chemical resistance may not be sufficiently obtained. Also, the content of the aromatic vinyl compound of the polymer block D is preferably not more than 25 masts% and further preferably not more than 20 mass%. When the content of the aromatic vinyl compound of the polymer block D exceeds 25 mass%, rubbery properties are lost and impact resistance may be insufficient.

The molecular structure of the above block copolymer may be branched, radial or in combination of these, and the block structure thereof may be diblock, triblock or multiblock or a combination of these. Examples are block copolymers represented by $A-(B-A)_n$, $(A-B)_n$, $A-(B-C)_n$, $(B-C)_n$, $(B-C)_n$, $A-(D-A)_n$, $(A-D)_n$, $A-(D-C)_n$, $C-(D-C)_n$, $(D-C)_n$, $A-(B-C-D)_n$ or $(A-B-C-D)_n$ (where n is an integer of not less than, and preferably a block copolymer having a structure of A-B-A, A-B-A-B, A-B-C, A-D-C or C-B-C.

The number average molecular weight (Mn) of the above hydrogenated product of the diene rubber is preferably 40,000-700,000, and more preferably 50,000-500,000, further preferably 60,000-400,000 and particularly preferably 70,000-300,000. When Mn is less than 40,000, impact resistance is insufficient. On the other hand, when it exceeds 700,000, laser sinterability may be insufficient.

Examples of the ethylene-α-olefin copolymer rubber (a2) include ethylene/a-olefin copolymers and ethylene/α-olefin/non-conjugated diene copolymers. Examples of the α-olefin constituting the Component (a2) include α-olefins with 3-20 carbon atoms. Concrete examples are propylene, 1-buterie, 1-pentene, 1-hexene, 4-methyl-1-pentene, 1-heptene, 1-octane, 1-decene, 1-dodecene, 1-hexadecene and 1-eicocene. These α-olefins can be used alone or tin combination of two or more. The number of carbon atoms of is preferably 3-20, more preferably 3-12 and further preferably 3-8. When the number of carbon atoms exceeds 20, copolymerizability is lowered, and surface appearance of molded articles may be insufficient. The mass ratio of ethylene/α-olefin is preferably 5-95/95-5, more preferably 50-90/50-10, further preferably 60-88/40-12 and particularly preferably 70-85/30-15. When the mass ratio of a-olefin exceeds 95, weatherability is insufficient. On the other hand, when it ifs less than 5, elasticity of the rubber-like polymer is insufficient so that sufficient impact resistance may not be exhibited. Meanwhile, in the present invention, the term "rubber" means one which exhibits rubber elasticity at room temperature.

The non-conjugated diene includes alkenylnorbornenes, cyclic dienes and aliphatic dienes, and preferably 5-et.hylydene-2-norbornene and dicyclopentadiene. These non-conjugated dienes can be used alone or in combination of two or more. The ratio of the non-conjugated diene relative to the total of the rubber-like polymer is preferably 0-30 masts%, more preferably 0-20 mass% and further preferably 0-10 mass%. When the ratio of the non-conjugated diene exceeds 30 mass%, appearance of molded articles and weatherability may be insufficient. Meanwhile, the amount of the unsaturated group in Component (a2) is preferably 4-40 in terms of iodine value.

In addition, Mooney viscosity ($ML_{1+4}$, 100˚C; according to JIS K6300) oaf Component (a2) is preferably 5-80, more preferably 10-65 and further preferably 15-45. When the Mooney viscosity exceeds. 80, fluidity is insufficient, and when the Mooney viscosity is less than 5, impact resistance of the resulting molded articles may be insufficient.

The monomer component (b) is a vinyl monomer component comprising ain aromatic vinyl monomer and optionally another monomer copolymerizable with the aromatic vinyl monomer. Of these, the aromatic vinyl monomer includes the same as the aromatic, vinyl monomer used for production of the polymer block (A) of the above hydrogenated product of the diene rubber, and these can be used alone or in combination of two or more. A preferable aromatic vinyl compound is styrene or an aromatic vinyl compound comprising 50 mass% or more of styrene. The amount to be used of the aromatic vinyl compound is preferably 5-95 mass%, more preferably 5-90 mass% and further preferably 5-85 mass% based on the total of the monomer component (b). When the amount to be used of the aromatic vinyl compound is less than 5 mass%, heat stability of the resin is insufficient. On the other hand, when it exceeds 95 mass%, toughness of the resin may not be sufficiently obtained.

Another monomer copolymerizable with the aromatic vinyl monomer includes, for example, vinyl cyanide compounds such as acrylonitrile and methacrylonitrile; alkyl acrylates such as methyl acrylate, ethyl acrylate, propyl acrylate, butyl acrylate, amyl acrylate, hexyl acrylate, octyl acrylate, 2-ethylhexyl acrylate, cyclohexyl acrylate, phenol acrylate; alkyl methacrylates such as methyl methacrylate, ethyl methacrylate, propyl methacrylate, butyl methacrylate, amyl methacrylate, hexyl methacrylate, octal methacrylate, 2-ethylhexyl methacrylate, cyclohexyl methacrylate, dodecyl methacrylate, octadecyl methacrylate, phenyl methacrylate and benzyl methacrylate; unsaturated acid anhydrides such as maleic anhydride and itaconic anhydride; unsaturated acids such as acrylic acid and methacrylic acid; imide compounds of $\alpha,\beta$-unsaturated dicarboxylic acids such as maleimide, N-methylmaleimide, N-butylmaleimide, N-phenylmaleimide and N-cyclohexylmaleimide; and epoxy group-containing unsaturated compounds such as glycidyl acrylate, glycidyl methacrylate and allylglycidyl ether, and preferably include vinyl cyanide compounds, alkyl acrylates and alkyl methacrylates, and particularly preferably acrylonitrile and methyl methacrylate. The alkyl (meth)acrylates represented by methyl methacrylate tend to improve laser absorbability. Also, the epoxy group-containing unsaturated compound is preferable for improving compatibility with a polyolefin resin of component (A), especially a polypropylene modified with maleic anhydride and the like. Meanwhile, in this specification, the term "(meth)acrylate" means acrylate and/or methacrylate. The another monomer as above can be used alone or in combination of two or more. The amount to be used of the another monomer as above may be an amount which does not impair the effect of the present invention and preferably 5-95 mass%, more preferably 10-95 mass% and further preferably 15-95 mass%, relative to 100 mass% of the total of the monomer component (b).

The amount to be used of the above rubber-like polymer (a) is preferably 5-40 mass% and further preferably 10-35 mass% relative to 100 mass% of the total of the components (a) and (b) . When the amount to be used of the component (a) is less than 5 mass%, impact resistance of the shaped article is insufficient. On the other hand, when it exceeds 40 mass%, decrease in melt viscosity may be insufficient. Also, the amount of the rubber in the thermoplastic resin composition is preferably 1-36 parts by mass, and further preferably 2-28 parts by mass relative to 100 parts of the thermoplastic resin composition. When the rubber amount is less than 1 part by mass, impact resistance of the shaped article is insufficient. On the other hand, when it exceeds 36 parts by mass, decrease in melt viscosity may be insufficient.

The graft ratio of the above Component (B) is usually 10-200%, preferably 20-120 mass% and further preferably 30-90 mass%. When the graft ratio is less than 10%, impact strength is insufficient. On the other hand, when it exceeds 200%, decrease in melt viscosity may be insufficient. The graft ratio can be easily adjusted by kind or amount of a polymerization initiator, polymerization temperature or amount of a monomer.

The limiting viscosity [η] (measured at 30°C in methyl ethyl ketone) of the soluble matter in acetone (but acetonitrile when acrylic rubber is used) of the above Component (B) is 0.2-1.5 dl/g, preferably 0.25-0.8 dl/g, and further preferably 0.3-0.6 dl/g. When the limiting viscosity [η] is less than 0.2 dl/g, impact strength of the shaped article is insufficient. On the other hand, when it exceeds 1.5 dl/g, decrease of melt viscosity may be insufficient so that fluidity upon melting may be insufficient. The limiting viscosity [η] can be easily controlled by changing kind or amount of a polymerization initiator, chain transfer agent, emulsifier, solvent or the like as well as polymerization time or polymerization temperature.

The graft ratio (masts%) can be determined by the following equation (1).

$$\text{Graft ratio (mass\%)} = \{(T - S) / S\} \times 100 \quad (1)$$

In the above equation (1), T is the mass (g) of insoluble matter obtained by adding 1 g of Component (B) to 20 ml of acetone (but acetonitrile when an acrylic rubber is used), shaking the mixture for 2 hours by a shaker, and then centrifuging the mixture by a centrifuge (at a rotation speed of 23,000 rpm) for 60 minutes to separate the insoluble matter from the soluble matter, and S is the mass (g) of the component (a) contained in 1 g of the Component (B).

Measurement of the limiting viscosity [η] of the copolymer was conducted by the following method. First, a copolymer was dissolved in methyl ethyl ketone to make five samples different in concentration. The Ubbelohde viscometer tube was used to measure a reduced viscosity at each concentration at 30°C. Using these results, the limiting viscosity [η] was obtained. The unit is dl/g.

The Component (B) can be produced by performing radical graft polymerization of the above component (b) in the presence of the component (a) in accordance with emulsion polymerization, suspension polymerization, solution polymerization, bulk polymerization or the like. Of these, preferable are emulsion polymerization and solution polymerization. Meanwhile, for the above radical graft polymerisation, commonly-used polymerization solvents (in case of solution polymerization), polymerization initiators, chain transfer agents and emulsifiers (in case of emulsion polymerization) can be used. The monomer component used for producing the Component (B) may be entirely added and polymerised or may be dividedly or continuously added and polymerized, in the presence of the whole amount of the rubber-like polymer. Also, a method in combination of these can be used for polymerization. Further, the whole or a part of the rubber-like polymer may be added and polymerized in the course of polymerization.

The solvent, used for solution polymerisation is an inert solvent for polymerization, which is used for ordinary radical polymerization. For example, organic solvents including aromatic hydrocarbons such as ethylbenzene and ketone such as methyl ethyl ketone and acetone, halogenated hydrocarbons such as dichloromethylene and carbon tetrachloride and the like can be used. The amount to be used of the solvent is preferably 20-200 parts by mass and further preferably 50-150 parts by mass, relative to 100 parts by mass of the total amount of the above Components (a) and (b).

As the polymerization initiator, a common initiator that suits a polymerization process is used. The polymerization initiator used for solution polymerization includes, for example, organic peroxides such as ketone peroxide, dialkyl peroxide, diacyl peroxide, peroxyester, hydroperoxide, and t-butylperoxy isopropyl carbonate. Also, the polymerization initiator may be entirely added or may be continuously added to the polymerization mixture. The amount to be used of the polymerization initiator is preferably 0.05-2 mass% and more preferably 0.2-0.8 mass%, relative to the monomer component.

The polymerization initiator for emulsion polymerization includes, for example, redox systems composed of an organic hydroperoxide represented by cumene hydroperoxide, diisopropyl benzene hydroperoxide and para-menthane hydroperoxide in combination with a reducing agent represented by a sugar-containing pyrophosphate formulation and a sulfoxylate formulation, or peroxides such as persulfate, azobisisobutyronitrile and benzoyl peroxide. Of these, preferably used are redox systems composed of an organic hydroperoxide represented by cumene hydroperoxide, diisopropyl benzene hydroperoxide and para-menthane hydroperoxide in combination with a reducing agent represented by a sugar-containing pyrophosphate formulation and a sulfoxylate formulation. Also, the initiator may be an oil-soluble or Mater-soluble one, or a combination of oil-soluble and water-soluble ones. The ratio oaf the water-soluble initiator to be used when used in combination is preferably not more than 50 mass% and further preferably not more than 25 mass% of the total added amounts. Further, the polymerization initiator may be entirely or continuously added to the polymerisation mixture. The amount to be used of the polymerization initiator is preferably 0.1-1.5 mass% and more preferably 0.2-0.7 mass%, relative to the monomer component.

The chain transfer agent includes, for example, mercaptanes such as octyl mercaptan, n-dodecyl mercaptan, t-dodecyl mercaptan, n-hexadecyl mercaptan, n-tetradecyl mercaptan and t-tetradecyl mercaptan; hydrocarbons such as tetraethylthiuram sulfide, carbon tetrachloride, ethylene bromide and pentaphenylethane; or dimmers of acrolein, methacrolein, allylalcohol, 2-ethylhexylthioglycolate and α-methylstyrene. These chain transfer agents can be used alone or in combination of two or more. A method for using a chain transfer agent may be any of wholly, dividedly or continuously adding. The amount to be used of the chain transfer agent is preferably is 0-5 mass%, relative to the monomer component.

The emulsifier includes, for example, an anionic surfactant, nonionic surfactant and amphoteric surfactant. Of these, the anionic surfactant includes, for example, a sulfuric acid ester of a higher alcohol, an alkylbenzene sulfonate, an aliphatic sulfonate, phosphate and fatty acid ester. Also, the nonionic surfactant includes, for example, alkylester type, alkylether type and alkylphenylether type of an ordinary polyethylene glycol. Further, the amphoteric surfactant includes, for example, those containing a carbonate, sulfate, sulfonate or phosphate as an anion part, and an amine salt or quaternary ammonium salt as a cation part. The amount to be used of the emulsifier is preferably 0.3-5 mass%, relative to the monomer component. Meanwhile, the polymerization temperature during graft polymerization is preferably 10-160°C and more preferable 30-120°C.

The rubber-reinforced styrene resin composition obtained by polymerization of a vinyl monomer (b) in the presence of a rubber-like polymer (a) usually contains copolymers made from monomer components which are grafted onto the rubber-like polymer, and ungrafted components made from monomer components which are not grafted onto the rubber-like polymer (that is, homopolymers and copolymers of the monomer components).

In the preferable embodiment of the present invention, Component (B) includes at least the following three embodiments; (i) an embodiment comprising a graft copolymer obtained by polymerizing a vinyl monomer (b) in the presence of a rubber-like polymer (a) comprising the above component (a1); (ii) an embodiment comprising a graft copolymer obtained by polymerizing a vinyl monomer (b) in the presence of a rubber-like polymer (a) comprising the above component (a2): and (iii) an embodiment comprising a graft copolymer obtained by polymerizing a vinyl monomer (b) in the presence of a rubber-like polymer (a) comprising the above components (a1) and (a2). Further the above embodiment (i) or (ii) includes an embodiment comprising a graft copolymer of the above (i) or (ii) in combination with a graft copolymer of the above (ii) or (i), respectively.

The amount to be used of Component (B) is 20-90 mass%, preferably 20-80 mass%, more preferably 20-60 mass% and further preferably 20-40 mass% relative to 100 mass%; of the total of the above Components (A) and (B). When the amount to be used of the Component (B) is less than 20 parts by-mass, impact resistance (chirpy impact strength with notch) and water absorption resistance of the shaped article are inferior, and warping may occur. On the other hand, when the amount to be used of the Component (B) exceeds 90 mass%, density and impact resistance of the shaped article are lowered, and dimensional accuracy is inferior.

Production method, properties and shaping method of laser-sinterable powder

The laser-sinterable powder of the present invention can be produced by melt-kneading predetermined amounts of Components (A) and (B) to obtain a uniform thermoplastic resin composition, and then grinding the composition, and classifying the resulting powder. Alto, the laser-sinterable powder of the present invention can be obtained by grinding and classifying Components (A) and (B) separately to obtain the respective powders, and then mixing them in a predetermined ratio. Grinding method is not particularly limited, but includes, for example, freeze-miiling. Classification method is not particularly limited, but can be performed, for example, using a predetermined sieve.

When Components (A) and (B) are melt-kneaded, a compatibiliser can be added to the thermoplastic resin composition of the present invention in accordance with a known method in order to improve compatibility between the two components. As a compatibilizing method, can be used, for example, methods disclosed in "Compatibilizers for Plastics and their developmental techniques, Classificaiton·Evaluation·Recycle (Plastic no soyokazai to kaihatsu gijutsu bunrui·hyoka·recycle)" edited by AKIYAHA, H. , CMC Publishing Co., Ltd. , 1992, 12, and "Practical Polymer Alloy (Jissen polymer alloy)" edited by OYANAGI, Y., Ague Shofu Sha, 1993, 10. The compatibilizer in case of using a polyolefin resin as Component (A) includes, for example, AES resin (a rubber modified styrene resin which is obtained by graft copolymerisation of styrene and acrylonitrile in the presence of an ethylene-$\alpha$-olefin copolymer rubbers) a block copolymer having a polyolefin block and a styrene block and a modified polypropylene which is obtained by graft copolymerization of styrene and acrylonitirle in the presence of a polypropylene resin, and besides includes a combined use of a maleic anhydride modified polypropylene and an epoxy modified a crylonitirle-stvrene copolymer. The blending amount of the compatibilizer can be appropriately selected in accordance with kinds and blending amounts of Components (A) and (B).

The laser-sinterable powder according to the present invention can be blended with an additive in accordance with an object and application in an amount which does not impair the effect of the present invention. Such an additive includes, for example, flow agents, fillers, heat stabilizers, antioxidants, ultraviolet absorbents, anti-aging agents, antistatic agents, plasticizers, slipping agents, flame retardant, antimicrobial agents, fluorescent whitening agents, fluorescent dyes, other agent, light dispersing agents, crystal nucleating additives, flow modifiers, impact modifiers, infrared, absorbents, photochromic agents, photocatalytic stain-proof agents and polymerization initiators. These can be used alone or in combination of two or more.

Methods for adding these additives differ depending upon kinds of additives, and are not particularly limited. For example, the additive may be blended so as to be uniformly contained in the thermoplastic resin composition of the present invention when Components (A) and (B) are melt-kneaded, or the additive may be added to the laser-sinterable powder of the present invention so as to stick to the surface of the powder or uniformly blended with the powder.

The above flow agent includes, for example, inorganic powdery substances such as hydrous silica, amorphous alumina, vitreous silica, vitreous phosphate, vitreous borate, vitreous oxide, titania, talc, mica, fumed silica, kaolin, attapulgite, calcium silicate, alumina and magnesium silicate. These flow agents are preferably added to and blended with the laser-sinter-able powder of the present invention which is previously produced by melt-kneading the above Components (A) and (B). These can be used alone or in combination of two or more. The content of the above flow agent is usually 0.02--5 parts by mass, relative to 100 parts by mass of the total amount of the above Components (A) and (B). The preferable particle diameter of the above flow agent is not more than 100 $\mu$m, and more preferably not more than 60 $\mu$m.

The above fillers include, for example, talc, mica, clay, wollastonite, calcium carbonate, glass fiber, glass bead, glass balloon, milled fiber, glass flake, carbon fiber, carbon flake, carbon bead, carbon milled fiber, metal flake, metal fiber, metal coated-glass fiber, metal coated-carbon fiber, metal coated-glass flake, silica, ceramic particle, ceramic fiber, aramid particle, aramid fiber, polyarylate fiber, graphite, conductive-carbon black, and various whiskers. These can be used alone or in combination of two or more. The content of the above filler is usually 0.1-5 parts by mass, relative to 100 parts by mass of the total amount of the above Components (A) and (B).

The above heat stabilizer includes, for example, phosphates, hindered phenols and thioethers. These can be used alone or in combination of two or more. The content of the above heat stabilizer is usually 0.01-2 parts by mass, relative to 100 parts by mass of the total amount of the above Components (A) and (B).

The above antioxidant includes, for example, hindered amines, hydroquinones, hindered phenols and sulfur-containing compounds. These can be used alone or in combination of two or more. The content of the above antioxidant is usually 0. 01-2 parts by mass, relative to 100 parts by mass of the total amount of the above Components (A) and (B).

The above ultraviolet absorbent incudes, for example, benzophenones, benzotriazols, salicylates and metal complex salts. These can be used alone or in combination of two or more. Also, it may be preferable that these are used in combination with hindered gamines. The content of the above ultraviolet absorbent is usually 0.05-2 parts by mass, relative to 100 parts by mass of the total amount of the above Components (A) and (B).

The content of the above anti-aging agent is usually 0.01-2 parts by mass, relative to 100 parts by mass of the total amount of the above Components (A) and (B).

The above antistatic agent includes, for example, low molecular weight type antistatic agents and high molecular weight type antistatic agents. Also, these may be ion conductive type or election conductive type.

The low molecular weight type antistatic agent includes, for example, anionic antistatic agents; cationic antistatic agents; non-ionic antistatic agents; amphoteric antistatic agents; complex compounds; metal alkoxides such as alkoxysilane, alkoxytitanium and alkoxyzirconium and derivatives thereof; coated silica, phosphates and phosphoric acid esters. These can be used alone or in combination of two or more.

The high molecular weight antistatic agent includes, for example, vinyl copolymers having sulfonic acid metal salts in molecule, alkylsuflonic acid metal salts, alkylbenzene sulfonic acid metal salts and betaine. Further, polyamide elastomers and polyester elastomers can be used as the high molecular weight antistatic agent. These can be used alone or in combination of two or more.

The content of the above antistatic agent is usually 0.1-5 parts by mass, relative to 100 parts by mass of the total amount of the above Components (A) and (B).

The content of the above plasticizer is usually 0.5-5 parts by mass, relative to 100 parts by mass of the total amount of the above Components (A) and (B).

The above slipping agent includes, for example, fatty acid ester, hydrocarbon resin, paraffin, higher fatty acid, hydroxy fatty acid, fatty acid amide, alkylene bis-fatty acid amide, aliphatic ketone, fatty acid lower alcohol ester, fatty acid polyhydric alcohol ester, fatty acid polyglycol ester, aliphatic alcohol, polyhydric alcohol, polyglycol, polyglycerol, metal soap, silicone and modified silicone. These can be used alone or in combination of two or more. The content of the above sipping agent is usually 0.5-5 parts by mass, relative to 100 parts by mass of the total amount of the above Components (A) and (B).

The above flame retardant includes, for example, organic flame retardants, inorganic flame retardants and reactive flame retardants. These can be used alone or in combination of two of more. The content of the above flame retardant is usually 0.05-30 parts by mass, relative to 100 parts by mass of the total amount of the above Components (A) and (B).

Meanwhile, when the flame retardant is contained in composition of the present invention, use of flame retardant aid is preferable. The flame retardant aid includes, for example, antimony compounds such as diantimony trioxide, diantimony tetroxide, diantimony pentoxide, sodium antimonite, antimony tartrate, zinc berate, barium metaborate, hydrous alumina, zirconium oxide, ammonium polyphosphate, tin oxide and iron oxide. These can be used alone or in combination or two or more.

The content of the above antimicrobial agent is usually 0.1-5 parts by mass, relative to 100 parts by mass of the total amount of the above Components (A) and (B).

The above coloring agent includes, for example, inorganic pigment, organic pigment, and dye. These can be used in combination of two or more. The content of the above coloring material is usually not more than 10 parts by mass, preferably 0.0005-5 parts by mass and more preferably 0.001-2 parts by mass, relative to 100 parts by mass of the total amount of the above Components (A) and (B).

The above light dispersing agent Includes, for example, acrylic cross-linked particle, silicons cross-linked particle, very thin glass flakes and calcium carbonate particle.

The above impact modifier includes graft rubbers.

The above photocatalytic stain-proof agent includes titanium oxide particles and zinc oxide particles.

The laser-sinterable powder of the present invention, except the above additive itself, require to be a powder having a 50% average particle diameter of 10-100 $\mu$m, preferably having a 50% average particle diameter of 20-90 $\mu$m, further preferably having a 50% overage particle diameter of 30-80 $\mu$m and particularly preferably having a 50% average particle diameter of 30-70 $\mu$m. When the 50% average particle diameter is less than 10 $\mu$m, fluidity of the powder on a part bed may be insufficient. When the 50% average particle diameter exceeds 100 $\mu$m, dimensional accuracy of the shaped article is insufficient and large unevenness may occur on a surface of the shaped article. The powder satisfying the above predetermined particle diameter range can be obtained, for example, by obtaining a. 200 mesh pass product using a 200 mesh sieve or changing an operation condition of the above grinding.

The laser-sinterable powder of the present invention exhibits a sharp decrease in melt viscosity at a temperature not less than the softening point, and the melt flow rate (HFR) (measured in accordance with ISO 1133 under conditions of a temperature of 180°C with a load of 10 kg) of the thermoplastic resin composition which comprises Components (A) and (B) to constitute the above powder is preferably 5-500 g/10 min, further preferably 10-200 g/10 min and particularly preferably 20-160 g/10 min. When the MFR is less than 5 g/10 min, density of the shaped article may be lowered, and it tends to be difficult to obtain dense shaped articles. On the other hand, when the MFR exceeds 500 g/10 min, the melting point of the laser-sinterable powder may become too low. The thermoplastic resin composition satisfying the above MFR range can be obtained by appropriately adjusting kinds and blending ratios of Components (A) and (B).

The angle of repose of the laser-sinterable powder of the present invention is preferably not more than 60°, more preferably not more than any further preferably not more than 50°. When the angle of repose exceeds 60°, fluidity of particles on a part bed becomes uneven, and thickness of the particle layer may become uneven.

The bulk density of the laser-sinterable powder of the present invention is preferably not less than 0.1 (g/cm$^3$), more preferably not less than 0.15 (g/cm$^3$) and further preferably not less than 0.20 (g/cm$^2$). When the bulk density is less than 0.1 (g/cm$^3$), it tends to be difficult to obtain high density shaped articles.

Shaped articles can be obtained by using the laser-sinterable powder of the present invention in accordance with the usual SLS. A shaped article made of melt-adhered powder can be obtained, for example, by forming a thin layer of the powder and maintaining the thin layer at a temperature slightly lower than the softening point, then irradiating the thin layer with a laser beam in accordance with slice data obtained by converting data such as of CAD for a 3D shaped article so as to melt-bond and sinter the powder of the thin layer selectively, and then repeating the steps similar to the above for layering another thin layer of the powder on the above thin layer and irradiating it with the laser beam so as to selectively sinter the powder of the another thin layer.

Such shaping by SLS as above can be practiced with a conventional SLS shaping device. Such a shaping device generally comprises a workbench (part bed) on which a thin layer of the laser-sinterable powder is arranged, a lifting means for moving the workbench up and down, a powder feeding means such as a roller for feeding the laser-sinterable powder on the workbench to form a thin layer thereof, a laser beam applying means for selectively heating the thin layer to sinter it, and a cooling means for cooling the sintered layer. In such a shaping device, shaped articles can be formed by selectively heating and sintering a thin layer arranged on the workbench with the laser beam, and then repeating the steps of slightly descending the workbench, layering another thin layer on the sintered layer and selectively beating and sintering the thin layer with a laser beam, whilst appropriately cooling one or more of the sintered thin layers. Such a shaping device includes, for example, devices disclosed in JP-A-2003-305777, JP-A-2005-238488, JP-A-2007-21747 and JP-A-2007-30303.

EXAMPLE

Hereinafter, the present invention will be described in more detail by way of Example. However, the present invention is not limited to the following Examples.

Evaluation method

(1) Density

Using an SLS shaping device (available from Aspect Inc.), a test piece of 80 mm x 10 mm x 4 mm in dimension was shaped under the following conditions.

· SLS shaping conditions
Laser scanning rate: 6.3 m/s
Laser scanning interval: 0.05 mm
Lamination thickness: 0.1 mm
Laser output: 13W
Part bed temperature: as shown in Tables 2 and 5
Feed bed temperature: as shown in Tables 2 and 5
The obtained test piece was used to measure in accordance with ISO 1183.

(2) Charpy impact strength (C-IMP)

The test piece obtained in the above (1) was used to measure under the following conditions in accordance with ISO 179.

· Measurement conditions
Notch: with notch (TYPE-A), without notch

Load: 2J

(3) Warping

The test piece obtained in the above (1) was placed on a horizontal plane, and a gap between the horizontal plane and the shaped article was measured.

· Evaluation standard
○: a gap between the horizontal plane and the shaped article is not more than 1 mm
✕: a gap between the horizontal plane and the shaped article is not less than 1 mm

(4) Water absorption

The test piece obtained in the above (1) was left for 30 days in a thermostatic chamber at a temperature of 23 ˚C and 50% humidity, and a weight difference between before and after leaving was measured, and water absorption was measured assuming that the weight difference was the water absorbing amount.

(5) Dimensional accuracy

Using an SLS shaping device (available from Aspect Inc.), a test piece of 20 mm (laser sub-scanning direction) x 30 mm (laser main-scanning direction) x 2 mm (laser radiating direction) in dimension was shaped under the following conditions. After shaping, a difference between the target size (2 mm) and the size in the laser radiating direction in the middle portion of the test piece was obtained.

· SLS shaping conditions
Laser scanning rate: 6.3 m/s
Laser scanning interval: 0.05 mm
Layer thickness: 0.1 mm
Laser output: 13W
Part bed temperature: as in Tables 2 and 5
Feed bed temperature: as in Tables 2 and 5

(6) 50% average particle diameter

Measurement was performed using a laser diffraction particle size analyzer "SALD-2100 (trade name)" available from SIMAZU CORPORATION.

(7) Angle of repose

Measurement was performed in accordance with JIS R9301-2-2.

(8) Bulk density

Measurement was performed in accordance with JIS K 6721.

(9) Melt flow rate (MFR)

Measurement was performed under the following conditions in accordance with ISO 1133.

· Measurement conditions
Temperature: 180˚C
Load: 10 kg

(10) Melting point (Tm)

Measurement was performed using a differential scanning calorimeter DSC2910 type (trade name; available from TA Instruments) in accordance with JIS K 7121.

Materials to be used

(A) Crystalline resin (polyolefin resin)

PP-1: homo PP-MA1B (trade name) available from Japan Polychem Corporation
PP-2: block PP-BC03C (trade name) available from Japan Polychem Corporation

(B) Styrene resin

B-1: a hydrogenated rubber-reinforced styrene resin obtained by the following Production Example 1.
B-2: a hydrogenated rubber-reinforced styrene resin obtained by the following Production Example 2.

Production Example 1 (hydrogenated rubber-reinforced styrene resin B-1)

(1-1)

In a 50 L autoclave, 25000 g of degased and dehydrated cyclohexane and 800 g of 1,3-buatdiene were placed, and then 1.0 g of n-butyllithium was added thereto, and isothermal polymerization at a polymerization temperature of 50 ˚C was performed. After the conversion reached about 100%, 30.0 g of tetrahydrofuran, 2400 g of 1,3-butadiene and 200 g of styrene were added thereto, and polymerization with temperature increase from 50˚C to 80˚C was performed. After the conversion reached about 100%, 600 g of styrene was added, and polymerization was effected for 15 minutes.

(1-2)

Next, in another vessel, 15.0 g of titanocene dichloride was dispersed in 240 ml of cyclohexane, and allowed to react with 20 g of triethlaluminum at room temperature. The resulting dark blue solution that looked uniform was added to a polymer solution obtained above in (1-1), and hydrogenation was performed at 50˚C under a hydrogen pressure of 50 kgf/cm$^2$ for two hours. Later, the reaction mixture was desolvated with methanol/hydrochloric acid, and 2,6-di-tert-butylcatecol was added, and was dried under reduced pressure. Molecular characteristics of the resulting hydrogenated (A)-(D)-(C) triblock copolymer (hydrogenated-diene rubber polymer) were shown in Table 1.

(1-3)

In a stainless autoclave which had an internal volume of 15 L and was equipped with a ribbon blade, 28 parts of the hydrogenated triblock copolymer (hydrogenated diene rubber polymer) obtained in the (1-2), 51 parts of methyl methacrylate, 11 parts of styrene, 10 parts of acrylonitrile and 100 parts of toluene were placed and dissolved with stirring to obtain a uniform solution, and then 0.5 part of t-butylperoxy isopropylcarbonate and 0.1 part of t-dodecylmercaptane were added thereto, and temperature was raised with stirring. After the reaction solution reached 100˚C, polymerization was performed at a stirring speed of 100 rpm while the temperature was controlled to be constant. The reaction was effected for 6 hours and terminated. Polymerization conversion was 90%. Graft ratio was 42% and limiting viscosity [η] (methyl ethyl ketone, 30˚C) was 0.30 dl/g.
After the completion of the reaction, the reaction solution was cooled to 100˚C, 0.2 part of 2,2-methylenebis-4-methyl-6-butylphenol was added, and then the reaction mixture was taken out of the autoclave, followed by removal with steam distillation of unreacted substances and solvents. After the product was ground, volatile matters were substantially removed in a 40 mmφ vacuum vented extruder (220˚C, 700 mmHg vacuum) to obtain pellets of the hydrogenated rubber-reinforced styrene resin B-1. The content of the hydrogenated diene rubber polymer was 31%.
Table 1

| | |
|---|---|
| Amount of (A) (wt%) | 15 |
| Amount of (D) (wt%) | 65 |
| Composition of (D) Styrene/butadiene | 5/60 |
| 1,2-vinyl content of (D) (%) | 35 |
| Amount of (C) (wt%) | 20 |
| 1,2-vinyl content of (C) (%) | 10 |

(continued)

| Hydrogenation ratio | 97 |
|---|---|
| Number average molecular weight | 200,000 |

Production Example 2 (hydrogenated rubber-reinforced styrene resin B-2)

In a stainless autoclave which had an internal volume of 15 L and was equipped with a ribbon blade, 25 parts of the hydrogenated triblock copolymer obtained in the above (1-1) to (1-2) (hydrogenated diene rubber polymer), 52 parts of styrene, 23 parts of acrylonitrile and 120 parts of toluene were placed, and dissolved with stirring to obtain a uniform solution, and them 0.5 part of t-butylperoxy isopropylcarbonate and 0.1 part of t-dodecyl mercaptane were added, and temperature was raised under stirring. After the reaction mixture reached 100°C, polymerization was effected for 4 hours at a stirring speed of 100 rpm whilst temperature was controlled to be constant, and then temperature was raised to 120°C to effect reaction for 6 hours in total until it was terminated. Polymerization conversion was 95%. Graft ratio was 40% and limiting viscosity [η] (methyl ethyl ketone, 30°C) was 0.40 dl/g.
After the completion of the reaction, the reaction solution was cooled to 100°C, 0.2 part of 2,2-methylenebis-4-methyl-6-butylphenol as added, and then the reaction mixture was taken out of the autoclave, followed by removal with steam distillation of unreacted substances and solvents. After the product was ground, volatile matters were substantially removed in a 40 mmφ vacuum vented extruder (220°C, 700 mmHg vacuum) to obtain pellets of the hydrogenated rubber-reinforced styrene resin B-1. The content of the hydrogenated diene rubber polymer was 26%.

Examples 1-6

A polyolefin resin and a styrene resin were melt-kneaded together at 220°C and 100 rpm in the blending ratio shown in Table 2 using a DMG-50 type extruder available from NAKATANI MACHINE CO., LTD., and then freeze-milling was performed using a CM-11 type freezing-mill to obtain a powder. The powder was sieved to yield a 200 mesh pass product which was then subjected to the above evaluations. The results are shown in Table 2.
Table 2

| | | | Example 1 | Example 2 | Example 3 | Example 4 | Example 5 | Example 6 |
|---|---|---|---|---|---|---|---|---|
| Laser sinterable powder composition | Component (A) (polyolefin resin) | PP-1 (melting point: 1.63°C) | 70 | | 70 | | | 50 |
| | | PP-2 (melting point: 162°C) | | 70 | | 70 | 20 | |
| | Component (B) (styrene resin) | B-1 T683 (MX resin) | 30 | 30 | | | | 50 |
| | | B-2 T682 (PX resin) | | | 30 | 30 | 80 | |
| Evaluation of powder particles | diameter 50% average particle | μm | 50 | 55 | 62 | 53 | 60 | 45 |
| | Angle of repose | ° | 48.7 | 49.6 | 45.0 | 49.1 | 46.1 | 50 |
| | Bulk density | g/cm$^3$ | 0.28 | 0.27 | 0.30 | 0.27 | 0.29 | 0.24 |
| | MFR | g/10 min | 73.0 | 98.0 | 65.0 | 85.0 | 10.0 | 22.0 |

(continued)

| | | | Example 1 | Example 2 | Example 3 | Example 4 | Example 5 | Example 6 |
|---|---|---|---|---|---|---|---|---|
| Evaluation of dimensional accuracy of shaped of article | Part bed temperature | ˚C | 140 | 140 | 140 | 140 | 140 | 140 |
| | Feed bed temperature | ˚C | 120 | 120 | 120 | 120 | 120 | 120 |
| | Swelling in laser radiating direction | mm | 0.2 | 0.2 | 0.4 | 0.4 | 0.5 | 0.3 |
| Evaluation of shaped article | Density | g/cm$^3$ | 0.91 | 0.94 | 0.80 | 0.82 | 0.68 | 0.88 |
| | C-Imp (notched) | KJ/m$^2$ | 12 | 14 | 18 | 25 | 10 | 10 |
| | C-Imp (non-notched) | KJ/m$^2$ | 4 | 5 | 5 | 6 | 3 | 15 |
| | Warping | | ○ | ○ | ○ | ○ | ○ | ○ |
| | Water absorption (23˚C/ 50%RH) | % | 0.25 | 0.25 | 0.30 | 0.28 | 0.45 | 0.43 |

Production Example 3 (control: ABS resin obtained by suspension polymerization)

In a stainless autoclave equipped with a rod baffle and an anchor type stirring blade (inner diameter 140 mm), components shown in the following Table 3 were placed.

Table 3

| Styrene (ST) | 740 g |
|---|---|
| Acrylonitrile (AN) | 334 g |
| Rubber-like polymer (butadiene polymer: "diene NF35AA" available from Asahi Kasei) | 235 g |
| di-t-butylparacresol | 0.26 g |
| trisnonylphenylphosphite | 0.7 g |

After the autoclave was purged with nitrogen, temperature was raised under stirring at 100 rpm, and the rubber was dissolved at 85˚C for 3 hours. Three hours late, 0.3 g of t-butylperoxyacetate (TBPA) and 0.87 g of di-t-butylperoxide (DTBPO) dissolved in 30 g of ST was added under pressure with nitrogen to start copolymerization. Subsequently, temperature was raised to 100˚C over 30 minutes, and copolymerization was performed at 100˚C for 4.5 hours. In the course of the reaction, 3.7 g of terpinolene (TERP) dissolved in 33 g of ST was added under pressure 15 min, 1 hour and 2 hours after the addition of TBPA and DTBFO. After 3.5 hours, 19 g of ST and 84 g of AN, 2.6 g of TERP and 30 g of water were further added thereto, and then the reaction mixture was cooled, to obtain a pre-polymerized mixture.

Subsequently, the components shown in the following Table 4 were placed in a stainless autoclave (internal volume: 5L, inner diameter: 170 mm) equipped with a rod baffle and a swept back blade (diameter: 55 mm, blade width: 10 mm).

Table 4

| Water | 1200 g |
|---|---|

(continued)

| | |
|---|---|
| 2-Ethylhexylacrylate (1 wt% aqueous solution) | 160 g |
| Polyvinyl alcohol (PVOR) (5 wt% aqueous solution) | 23 g |
| Sodium salt of naphthalenesulfonic acid-formalin condensate (5 wt% aqueous solution) | 34 g |
| Sodium nitrite (5 wt% aqueous solution) | 0.96 g |
| Sodium sulfate (10 wt% aqueous solution) | 133 g |

Further, the above pre-polymerized mixture was added thereto, and the reaction mixture was purged with nitrogen, and then temperature elevation to 150˚C was started under stirring at 600 rpm. In the course thereof, 86 g of ST was continuously added thereto over 50 minutes after the temperature reached 120˚C and further 30 minutes passed. After the temperature reached 150˚C, polymerisation was further effected for 40 minutes, and the reaction mixture was maintained at 150 ˚C while unreacted monomers were removed from the reaction system by stripping method, and the reaction was continued for about 2 hours until little increase in the amount of removed unreacted monomers was observed. Then, the reaction system was cooled, separated and washed, and then dried to obtain about 1.1 kg of copolymer particles B-3. The rubber-like polymer content of the resulting copolymer was 14. 1 weight%, and the AN content of the resinous phase except the rubber-like polymer was 26 weight%, and MFR (220˚C, 10 Kg load) was 13 (g/10 mien).

Comparative Example 1

the copolymer particles B-3 obtained in Production Example 3 was subjected to freeze-milling using a CM-11 type freezing-mill available from TOHO Reinetsu Co., Ltd. to obtain a powder. The powder was sieved to yield a 200 mesh pass product which was then subjected to the above evaluations . The results are shown in Table 5.

Comparative Example 2

A transparent ABS resin (ABS810 available from TECHNO POLYMER CO., Ltd.) (hereinafter referred to as "B-4") was subjected to freeze-milling using a CM-11 type freezing-mill available from TOHO Reinetsu Co., Ltd, to obtain a powder. The powder was sieved to yield a 200 mesh pass product which was then subjected to the above evaluations. The results are shown in Table 5.

Comparative Example 3

The crystalline resin (polyolefin resin) PP-1 was subjected to freeze-milling using a CM-11 type freezing-mill available from. TOHO Reinetsu Co., Ltd. to obtain a powder. The powder was sieved to yield a 200 mesh pass product which was then subjected to the above evaluations. The results are shown in Table 5.

Comparative Example 4

Nylon 12UBESTA (a registered trademark) 3024NUX (hereinafter, referred to as "PA-1") available from Ube Industries, Ltd. was subjected to freeze-milling using a CM-11 type freezing-mill to obtain a powder. The powder was sieved to yield a 200 mesh pass product which was then subjected to the above evaluations. The results are shown in Table 5.

Table 5

| | | | Comparative Example 1 | Comparative Example 2 | Comparative Example 3 | Comparative Example 4 |
|---|---|---|---|---|---|---|
| Laser powder composition | Component (A) | PP-1 (melting point: 163˚C) | | | 100 | |
| | Component (B) | B-3 | 100 | | | |
| | | B-4 | | 100 | | |
| | Polyamide resin | PA-1 (melting point: 187˚C) | | | | 100 |

(continued)

|  |  |  | Comparative Example 1 | Comparative Example 2 | Comparative Example 3 | Comparative Example 4 |
|---|---|---|---|---|---|---|
| Evaluation of powder particles | 50% average particle diameter | μm | 45 | 51 | 59 | 48 |
|  | MFR | g/10min | <1 | <1 | 17.5 | <1 |
| Evaluation of dimensional accuracy of shaped article | Part bed temperature | ˚C | 85 | 85 | 140 | 160 |
|  | Feed bed temperature | ˚C | 75 | 75 | 120 | 150 |
|  | Swelling of laser irradiating direction | mm | 2.0 | 1.5 | 0.1 | 0.1 |
| Evaluation of shaped article | Density | g/cm³ | 0.45 | 0,47 | 0.85 | 0.92 |
|  | C-Imp (notched) | KJ/m² | 0.2 | 0.3 | 14 | 18 |
|  | C-Imp (non-notch) | KJ/m² - |  | - | 0.2 | 0.3 |
|  | Warping |  | ○ | ○ | × | × |
|  | Water absorption (23 ˚C/ 50%RH) | % | 0.50 | 0.52 | 0.22 | 2.78 |

The followings are found from the results shown in Tables 2 and 5.

The shaped, article obtained from the laser-sinterable resin powder of the present invention was high in density and impact resistance, small in warping, and low in water absorption.

Comparative Examples 1 and 2, in which a freeze-milled product of the suspension-polymerized ABS resin and a freeze-milled product of the transparent ABS were used, were both inferior in dimensional accuracy, low in density of shaped article and low in impact strength.

Comparative Example 3, in which a freeze-milled crystalline resin (polyolefin resin) blended in Example 1 was used singly, was great in warping and low in notched Charpy impact strength. Comparative Example 4, in which a polyamide elastomer was used, was great in warping, low in notched Charpy impact strength and high in water absorption of shaped articles.

INDUSTRIAL APPLICABILITY

The laser-sinterable powder of the present invention is useful as the raw material powder for the selective laser sintering, and can be utilized for shaping samples in the RP system and besides shaping actual products.

Claims

1.   A laser-sinterable powder made of a thermoplastic resin composition comprising 10-80 mass% of the following Component

(A) and 20-90 mass% of the following Component (B), and having a 50% average particle diameter of 10-100 μm.
Component (A): a crystalline resin with a melting point of 80-25048˚C.
Component (B): a styrene resin.

**2.** The laser-sinterable powder according to claim 1, wherein the above Component (A) is a polyolefin resin.

**3.** The laser-siuterable powder according to claim 1 or 2, wherein the above Component. (B) is a rubber-reinforced styrene resin composition which is obtained by polymerizing a monomer component (b) comprising an aromatic vinyl monomer and optionally another monomer copolymerizable with the aromatic vinyl monomer in a presence of a rubber-like polymer (a).

**4.** The laser-sinterable powder according to claim 3, wherein, the above component (a) is an ethylene-$\alpha$-olefin copolymer rubber and/or a hydrogenated product of a diene rubber.

**5.** The laser-sinterable powder according to any one of claims 1-4, which has a melt flow rate measured in accordance with ISO 1133 under the conditions of a temperature of 180 ˚C with a load of 10 kg is 5-500 g/10 min.

**6.** A shaped article made of the laser-sinterable powder according to any one of claims 1-5.

**7.** The shaped article according to claim 6, which is obtained by irradiating a thin layer of a laser-sinterable powder with a laser beam so as to selectively sinter the powder of the thin layer, and then repeating a step of layering another thin layer of a laser-sinterable powder on the thin layer, followed by irradiating the another thin layer with a laser beam so as to selectively sinter the powder of the another thin layer.

<table>
<tr><td colspan="2"><b>INTERNATIONAL SEARCH REPORT</b></td><td>International application No.<br>PCT/JP2008/064066</td></tr>
</table>

A. CLASSIFICATION OF SUBJECT MATTER
*C08J3/12*(2006.01)i, *B29C67/00*(2006.01)i, *C08L23/00*(2006.01)i, *C08L51/04*
(2006.01)i

According to International Patent Classification (IPC) or to both national classification and IPC

B. FIELDS SEARCHED

Minimum documentation searched (classification system followed by classification symbols)
C08J3/00-28, B29C67/00, C08L1/00-101/14

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-321711 A (Trial Corp.),<br>30 November, 2006 (30.11.06),<br>Claims; Par. Nos. [0008], [0032] to [0037]<br>(Family: none) | 1-7 |
| X<br>A | JP 9-511703 A (EOS GmbH Electro Optical<br>Systems),<br>25 November, 1997 (25.11.97),<br>Claims; page 4, lines 13 to 27<br>& EP 755321 A1        & WO 1996/008360 A1<br>& DE 4433118 A        & CN 1155258 A | 1,3-7<br>2 |

☒  Further documents are listed in the continuation of Box C.        ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 August, 2008 (29.08.08) | Date of mailing of the international search report<br>09 September, 2008 (09.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/064066

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-114685 A  (Degssa AG.),<br>15 April, 2004 (15.04.04),<br>Full text<br>& US 2004/0137228 A1    & US 2006/0244169 A1<br>& EP 1400340 A1          & DE 10311446 A<br>& PL 362310 A            & CA 2441676 A<br>& KR 10-2004-0026131 A  & CN 1500608 A<br>& SG 135925 A            & CA 2441676 A1 | 1-7 |
| A | JP 2005-254521 A  (Fuji Photo Film Co., Ltd.),<br>22 September, 2005 (22.09.05),<br>Full text<br>& US 2006/0290032 A1    & EP 1666234 A1<br>& WO 2005/021247 A1 | 1-7 |
| A | JP 2004-330730 A  (Fuji Photo Film Co., Ltd.),<br>25 November, 2004 (25.11.04),<br>Full text<br>& US 2004/0222548 A1    & EP 1475221 A2 | 1-7 |
| A | JP 2002-512645 A  (DSM N.V.),<br>23 April, 2002 (23.04.02),<br>Full text<br>& US 6110411 A          & EP 968080 A1<br>& WO 1998/041385 A1      & CN 1255887 A | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3183530 A
- JP 3477576 B
- JP 2003305777 A
- JP 2005238488 A
- JP 2007021747 A
- JP 2007030303 A

**Non-patent literature cited in the description**

- Compatibilizers for Plastics and their developmental techniques. Classificaiton·Evaluation·Recycle. CMC Publishing Co., Ltd, 1992, 12
- Practical Polymer Alloy. Ague Shofu Sha, 1993, 10